# EUROPÄISCHE PATENTSCHRIFT

(11) **EP 1 966 030 B1**
(45) Veröffentlichungstag und Bekanntmachung des Hinweises auf die Patenterteilung: **22.04.2015**
(21) Anmeldenummer: 06818839.0
(22) Anmeldetag: 27.11.2006
(51) Int. Cl.: B62D 15/02

(54) **PARKLENKASSISTENZSYSTEM UND VERFAHREN ZUM BETREIBEN EINES PARKLENKASSISTENZSYSTEMS**
PARKING STEERING ASSISTANCE SYSTEM AND METHOD FOR OPERATING A PARKING STEERING ASSISTANCE SYSTEM
SYSTÈME D ASSISTANCE DE MAN UVRE DE STATIONNEMENT ET PROCÉDÉ D UTILISATION D UN SYSTÈME D ASSISTANCE DE MAN UVRE DE STATIONNEMENT

(30) Priorität: 23.12.2005 DE 102005061909
(43) Veröffentlichungstag der Anmeldung: 10.09.2008
(73) Patentinhaber: Volkswagen Aktiengesellschaft, 38440 Wolfsburg (DE)
(72) Erfinder: ROHLFS, Michael, 38531 Rötgesbüttel (DE); SCHÖNING, Volkmar, 30900 Wedemark (DE); SCHWITTERS, Frank, 38154 Königslutter (DE)
(86) Internationale Anmeldenummer: PCT/EP2006/011345
(87) Internationale Veröffentlichungsnummer: WO 2007/079825

(56) Entgegenhaltungen:
- WO-A-2006/034923
- DE-A1- 10 250 021
- FR-A1- 2 728 859
- US-A- 6 154 695

## Beschreibung

Die Erfindung betrifft ein Parklenkassistenzsystem sowie ein Verfahren zum Betreiben eines Parklenkassistenzsystems, mit denen ein Ausrichten eines Kraftfahrzeugs in einer Parklücke unterstützt werden kann.

Moderne Kraftfahrzeuge verfügen häufig über Parkassistenzsysteme. Parkassistenzsysteme können verschiedene Assistenzfunktionen beinhalten. Diese umfassen beispielsweise
a) eine Abstandswarnung (Park Distance Control - PDC);
b) eine Anzeige von Informationen über die Eignung einer Parklücke, z.B. deren Abmessungen;
c) eine Unterstützung des Fahrers beim Einparken, was eine Lenkwinkelvorgabe oder sogar einen automatischen Lenkeingriff umfassen kann; oder
d) ein vollständig automatisiertes Einparken.

Bei den Assistenzfunktionen c) und d) ist in der Regel ein Lenkeingriff erforderlich. Dies bedeutet, dass die Lenkung des Kraftfahrzeugs während des Einparkvorgangs aktiv verändert werden muss. Dieser Lenkeingriff kann automatisch gesteuert von dem Kraftfahrzeug selbst vorgenommen werden. Bei den Assistenzfunktionen c) und d) berechnet das Kraftfahrzeug eine Sollbahn, entlang derer das Kraftfahrzeug in die Parklücke eingeparkt wird bzw. werden soll.

Aus der Druckschrift DE 38 27 729 A1 ist eine Kollisionswarneinrichtung für Kraftfahrzeuge bekannt, die eine Funktionalität gemäß a) bietet. Mit Hilfe der dort beschriebenen Vorrichtung wird ermittelt, ob auf einem von dem Kraftfahrzeug eingeschlagenen Kurs eine Kollisionsgefahr mit einem Hindernis besteht.

Aus den Druckschriften DE 102 20 426 A1 und DE 102 20 427 A1 sind Parkassistenzsysteme bekannt, die eine Größe einer Parklücke bestimmen, hieraus einen möglichen Einparkablauf für das Kraftfahrzeug errechnen und einem Fahrer Anweisungen geben, in welche Richtung er ein Lenkrad einzuschlagen hat und wie er das Kraftfahrzeug zu beschleunigen oder zu bremsen hat. In beiden Druckschriften ist ferner eine Ausführungsform erwähnt, bei der der Fahrer die Lenkung betätigt und das Kraftfahrzeug selbstständig beschleunigt und bremst. Ferner ist jeweils eine Ausführungsform beschrieben, bei der das Kraftfahrzeug ohne einen Lenkeingriff und ohne einen Beschleunigungs- und/oder Bremseingriff vollautomatisch ein- oder ausgeparkt wird. In der DE 102 20 427 A1 ist ferner vorgesehen, dass der vorteilhafte Ein- und Ausparkablauf dem Fahrer visuell auf einem Anzeigegerät dargestellt wird.

Aus der Druckschrift DE 103 54 661 A1 ist ebenfalls ein Einparkassistenzsystem bekannt, das eine Parklückengröße ermitteln, eine Sollbahn berechnen und einem Fahrer Informationen und Anweisungen über den Einparkvorgang mitteilen kann, so dass dieser das Kraftfahrzeug entlang der vorgegebenen Sollbahn in die Parklücke einparken kann. Während eines ersten einzügigen Einparkvorgangs kann das Lenken automatisch ausgeführt werden. Bei einer anderen Ausführungsform ist vorgesehen, dass Hinweise bezüglich einer Lenkrichtung und Fahrtrichtung für einen Rangiervorgang ausgegeben werden können.

Aus der Druckschrift WO 2004/059408 A1 ist ein Parkassistenzsystem bekannt, bei dem dem Fahrer die Parklücke und das Kraftfahrzeug zusammen mit einer Solltrajektorie in einer Draufsicht auf die Parksituation dargestellt werden. Durch eine schräge Darstellung des Kraftfahrzeugs bezüglich der Parklücke wird angezeigt, dass das Kraftfahrzeug am Ende des Einparkvorgangs von dem Fahrer noch in der Parklücke ausgerichtet werden kann, um eine optimale Parkposition für das Kraftfahrzeug herbeizuführen.

Parkassistenzsysteme, die ein Kraftfahrzeug vollautomatisch einparken, sind mit einigen Problemen verknüpft. Bei vollautomatisierten Vorgängen neigen Menschen dazu, ihr Kontrollpflichten nicht so streng zu befolgen, wie dieses geboten ist. So besteht die Gefahr, dass der Fahrer eines Kraftfahrzeugs, welches über ein Parkassistenzsystem zum vollautomatisierten Einparken verfügt, seine Pflichten vernachlässigt, den Parkraum insbesondere auf Personen, die in sich in den Parklückenbereich bewegen, zu überwachen. Ferner ist es zumindest für einen unerfahrenen Fahrer nicht einfach vorauszusagen, welche Fahrbewegungen das Kraftfahrzeug beim Einparken ausführen wird. Die Kontrollpflichten wahrzunehmen, wird hierdurch weiter erschwert. Um die Kontrollpflichten vollständig durch dass Kraftfahrzeug wahrnehmen zu lassen, sind sehr aufwendige Sensorsysteme mit Redundanz und Diversität erforderlich, da insbesondere bewegliche Objekte von einem Kraftfahrzeug nur schwierig als solche erkannt werden. Wird ein bewegliches Objekt, beispielsweise ein sich bewegendes anderes Kraftfahrzeug, nicht als ein bewegtes Objekt erkannt, so besteht eine erhöhte Kollisionsgefahr. Daher werden heute Parkassistenzsysteme bevorzugt, bei denen der Fahrer aktiv an dem Einparkprozess beteiligt ist, um die Kontrollpflichten wahrzunehmen und dennoch von einem Teil der Aufgaben beim Einparken entlastet zu werden.

Den bekannten semiautomatischen Parkassistenzsystemen ist gemeinsam, dass sie einen einzügigen Einparkvorgang, der zu einem optimal ausgerichteten geparkten Kraftfahrzeug führt, nur unterstützen können, wenn die Parklücke eine ausreichende Größe, insbesondere ausreichende Länge, aufweist. Insbesondere in Städten, in denen Kraftfahrzeuge häufig am Fahrbahnrand parallel zum Verlauf der Straße geparkt werden, sind jedoch häufig keine Parklücken markiert. Die Parklückengrößen variieren daher stark. Ausreichend große Parklücken, in die das Kraftfahrzeug einzügig mittels eines Parkassistenzsystems nach dem Stand der Technik eingeparkt werden kann, sind jedoch für einen Fahrer häufig nicht zu finden. Das Kraftfahrzeug ist somit am Ende eines ersten einzügigen Einparkschrittes zwar in die Parklücke eingeparkt, jedoch weicht eine Orientierung des Kraftfahrzeugs von einer Sollorientierung ab, die in der Regel parallel zu einem längsseitigen Parklückenrand ausgerichtet ist. Als einzügig wird ein Einparkschritt angesehen, bei dem das Kraftfahrzeug kontinuierlich bewegt wird und eine Umdrehungsrichtung der Kraftfahrzeugräder sich nicht ändert.

Aus der WO 2004/059408 ist zwar ein Parkassistenzsystem bekannt, bei dem dem Fahrer durch einen Pfeil eine anschließende Rangierrichtung angezeigt wird. Insgesamt ist jedoch das Problem, mittels eines semiautomatischen Parkassistenzsystems die Ausrichtung eines Kraftfahrzeugs hinsichtlich seiner Orientierung in einer Parklücke zu verändern, nicht optimal gelöst. Dasselbe Problem, die Ausrichtung des Kraftfahrzeugs zu verändern, tritt ebenfalls auf, wenn das Kraftfahrzeug aus der Parklücke ausgeparkt werden soll. Ziel eines Ausparkvorganges ist es, die Kraftfahrzeugorientierung so zu verändern, dass das Kraftfahrzeug anschließend in einem Zug aus der Parklücke bewegt werden kann.

Aus der DE 102 50 021 A1 ist ein Verfahren zum Betrieb eines Darstellungssystems in einem Fahrzeug zum Auffinden eines Parkplatzes beschrieben. Das Darstellungssystem umfasst zumindest eine Kamera, mit der ein Beobachtungsbereich in der Umgebung des Fahrzeugs aufgenommen werden kann, eine Bildverarbeitungseinheit, in der die von der Kamera kommenden Bilddaten verarbeitet werden können, sowie einen Bildschirm im Fahrzeuginnenraum, auf dem die von der Bildverarbeitungseinrichtung kommenden Bilddaten als Bild angezeigt werden können. Von der Bildverarbeitungseinheit wird hierbei in das aktuelle Bild am Bildschirm ein Parkplatzsymbol eingeblendet, das einen Bereich im aktuellen Bild maßstäblich symbolisiert, den das Fahrzeug unter Berücksichtigung der Fahrzeugeigenschaften, insbesondere der Fahrzeuggröße und des maximalen Lenkwinkels, beim Einparken, ausgehend von seiner aktuellen Position, erreichen kann. Ferner ist vorgesehen, ein Solllenkwinkelsymbol und ein Istlenkwinkelsymbol einzublenden. Eine Lenkwinkeleinstellung kann bei einer Ausführungsform automatisch ausgeführt werden.

Aus der FR 2 728 859 A1 ist ein System zum Unterstützen eines Einparkens beschrieben, bei dem in einer grafischen Darstellung drei unterschiedliche Bereiche gekennzeichnet sind. In den unterschiedlichen Bereichen ist beim Durchfahren entweder kein Lenkwinkeleinschlag, ein maximaler Lenkwinkeleinschlag nach links oder ein maximaler Lenkwinkeleinschlag nach rechts vorzunehmen, um in die Parklücke einzuparken. Dies ist über entsprechend orientierte Pfeile grafisch dargestellt.

Aus der US 6,154,695 A1 ist eine automatische Steuervorrichtung für ein Fahrzeug bekannt. Wenn ein Fahrer freiwillig die Lenkung während eines automatisch gesteuerten Lenkvorgangs betätigt, wird die automatische Steuerung unterbrochen und zu einer lenkkraftverstärkten Steuerung zurückgekehrt. Der Übergang wird nicht abrupt, sondern graduell ausgeführt, um eine plötzliche Änderung der Reaktion der Steuerung zu vermeiden.

In der nach dem Prioritätstag veröffentlichten WO 2006/034923 A1 ist ein Einparkverfahren für ein Fahrzeug beschrieben. Darin wird ein Verfahren vorgeschlagen, bei dem das Fahrzeug während des Einparkens automatisch so gelenkt wird, dass ein gewünschter Abstand zu einer seitlichen Parklückenbegrenzung bei möglichst paralleler Ausrichtung zur Parklückenbegrenzung erreicht wird.

Der Erfindung liegt somit die technische Aufgabe zugrunde, ein semiautomatisches System und ein Verfahren zum Betreiben eines solchen Systems zu schaffen, durch die ein Fahrer eines Kraftfahrzeugs beim Ausrichten eines Kraftfahrzeugs in einer Parklücke besser unterstützt wird.

Die technische Aufgabe wird erfindungsgemäß durch ein semiautomatisches Parklenkassistenzsystem mit den Merkmalen des Patentanspruchs 1 und ein Verfahren zum Betreiben eines semiautomatischen Parklenkassistenzsystems mit den Merkmalen des Patentanspruchs 12 erfindungsgemäß gelöst. Vorteilhafte Ausgestaltungen der Erfindung ergeben sich aus den Unteransprüchen.

Insbesondere wird ein semiautomatisches Parklenkassistenzsystem eines Kraftfahrzeugs zum Unterstützen eines Ausrichtens des Kraftfahrzeugs in einer Parklücke vorgeschlagen, das Mittel zum Erfassen eines Aktivierungssignals, Mittel zum Ermitteln einer Änderungsrichtung, in der eine Ausrichtung des Kraftfahrzeugs verändert werden soll und eine Steuereinheit umfasst, die in einem aktiven Zustand des Parklenkassistenzsystems mindestens einen Aktor so steuert, dass lenkbare Räder des Kraftfahrzeugs in die Änderungsrichtung eingelenkt sind, wenn die eingestellte Antriebsrichtung vorwärts ist, und die lenkbaren Räder maximal entgegen der Änderungsrichtung eingelenkt sind, wenn die eingestellte Antriebsrichtung rückwärts ist. Ein Fahrer, der beispielsweise sein Kraftfahrzeug einzügig in eine Parklücke eingeparkt hat, dieses jedoch noch nicht parallel zu dem längsseitigen Rand der Parklücke ausgerichtet ist, steht nun vor der Aufgabe, das Kraftfahrzeug in der Parklücke auszurichten. Wird das Parklenkassistenzsystem nun aktiviert, so muss dieses ermitteln, in welche Richtung die Kraftfahrzeugorientierung geändert werden soll.

Bei einem Einparken eines Kraftfahrzeugs rückwärtig in eine parallel zum Straßenrand verlaufende Parklücke ist am Ende eines ersten Einparkschrittes ein Abstand gemessen am vorderen Ende des Kraftfahrzeugs zum Parklückenrand größer als ein Abstand am hinteren Ende des Kraftfahrzeugs gemessen zum seitlichen Parklückenrand. Dies bedeutet, dass das Kraftfahrzeug bei einer Vorwärtsfahrbewegung nach rechts gelenkt werden muss. Die Änderungsrichtung ist in einem solchen Fall somit rechts. Das Parklenkassistenzsystem entlastet nun den Fahrer, sobald feststeht, in welche Richtung die Ausrichtung geändert werden soll, davon, Lenkbewegungen der Räder über das Lenkrad zu bewirken. Sobald der Fahrer den Vorwärtsgang einlegt und somit die Antriebsrichtung vorwärts gewählt ist, werden von der Steuereinheit des Parklenkassistenzsystems die Räder beispielsweise maximal in Richtung der Änderungsrichtung (d.h. nach rechts) eingelenkt. Der Fahrer kann nun das Kraftfahrzeug vorwärts bewegen. Ist die Länge der Parklücke nicht ausreichend, so dass das Kraftfahrzeug am Ende dieser Vorwärtsfahrbewegung noch nicht fertig ausgerichtet ist, so wird der Fahrer den Rückwärtsgang einlegen. Die gewählte Antriebsrichtung ist nun rückwärts. Das Parklenkassistenzsystem steuert nun den mindestens einen Aktor so, dass die lenkbaren Räder des Kraftfahrzeugs entgegen der Änderungsrichtung (in diesem Fall nach links), beispielsweise mit maximalem Lenkwinkel, eingelenkt werden. Bei einer anschließenden Rückwärtsbewegung des Kraftfahrzeugs wird die Ausrichtung des Kraftfahrzeugs hin zu seiner Sollausrichtung weiter verbessert. In kleinen Parklücken kann es erforderlich sein, mehrere Vorwärts- und Rückwärtsfahrbewegungen abwechselnd auszuführen, um das Kraftfahrzeug auszurichten. Das vorgeschlagene Parklenkassistenzsystem bietet den Vorteil, dass ein Fahrer von den aufwendigen Lenkbewegungen vollständig entlastet wird. Der Fahrer kann sich somit vollständig darauf konzentrieren, das Kraftfahrzeugumfeld zu beobachten und die Kraftfahrzeuggeschwindigkeit zu regeln. Ferner wird durch das vorgeschlagene Parklenkassistenzsystem erreicht, dass ein unerfahrener Fahrer sich bei den Rangierbewegungen nicht aus Versehen weiter in die Parklücke reinkrebst, d.h. sein Kraftfahrzeug immer dichter an die seitliche Begrenzung der Parklücke annähert. Das Parklenkassistenzsystem kann ebenso zum Ausparken des Kraftfahrzeugs verwendet werden. Ein Kraftfahrzeug, das am rechten Fahrbahnrand parallel in einer Parklücke geparkt ist, soll seine Ausrichtung hierbei nach links ändern. Daher wird das Parklenkassistenzsystem, sobald es ein Aktivierungssignal erfasst und als Änderungsrichtung links erkannt hat, bei einem Erfassen einer Antriebsrichtung vorwärts die Kraftfahrzeugräder, beispielsweise mit maximalem Lenkwinkel, nach links einlenken. Wird hingegen der Rückwärtsgang eingelegt, so werden die Räder in entgegengesetzter Richtung, d.h. nach rechts, beispielsweise mit maximalem Lenkwinkel, eingelenkt. Durch ein- oder mehrzügiges Rangieren kann die Ausrichtung des Kraftfahrzeugs in Richtung der Änderungsrichtung verändert werden, so dass das Kraftfahrzeug anschließend aus der Parklücke herausgefahren werden kann. Die Mittel zum Erfassen eines Aktivierungssignals können beispielsweise einen Schalter umfassen, über den ein Fahrer das Parklenkassistenzsystem aktiviert. Ebenso ist es möglich, dass die Mittel zum Erfassen eines Aktivierungssignals als Schnittstelle ausgestaltet sind, über die das Signal eines übergeordneten Parkassistenzsystems oder eines anderen Steuergerätes empfangen wird. Die Schnittstelle kann bei einem solchen Fall beispielsweise in Software ausgeführt sein. Das Parklenkassistenzsystem kann beispielsweise automatisch ein Aktivierungssignal von einem Parkassistenzsystem erhalten, welches das Kraftfahrzeug einzügig in die Parklücke einparkt oder hierfür Unterstützung bietet, wobei das Kraftfahrzeug jedoch am Ende dieses Einparkvorgangs nicht entlang einer Sollausrichtung ausgerichtet ist. Die Mittel zum Ermitteln einer Änderungsrichtung können ebenfalls beispielsweise einen Schalter und/oder etwas Ähnliches umfassen, über den ein Fahrer durch eine Berührung oder Betätigung eine Richtung auswählt, in der die Änderung der Sollausrichtung des Kraftfahrzeugs erfolgen soll. Die Mittel können jedoch auch so ausgestaltet sein, dass sie aus einer aktuell erfassten Kraftfahrzeugausrichtung und einer vorgegebenen Endausrichtung eine Differenz ermitteln und hieraus die Änderungsrichtung bestimmen. Die Mittel zum Ermitteln der Änderungsrichtung können ferner über einen Speicher verfügen, in dem Informationen beispielsweise über einen bisher zurückgelegten Streckenverlauf bzw. einen vorherigen Einparkvorgang abgelegt sind.

Wurde ein Kraftfahrzeug beispielsweise an einem rechten Fahrbahnrand parallel eingeparkt und abgestellt, so ergibt es sich aus diesen Informationen, dass bei einem erneuten Starten des Pkws und Aktivieren des Parklenkassistenzsystems ein Ausparken des Kraftfahrzeugs nach links beabsichtigt ist. Die Mittel zum Erfassen einer eingestellten Antriebsrichtung umfassen vorzugsweise einen Sensor, der an einem Schalthebel bzw. Wahlhebel eines Getriebes bzw. einer Getriebeautomatik angeordnet ist und die Schalt- oder Wahlhebelstellung detektiert. Ebenso ist es möglich, einen Sensor am Getriebe anzubringen.

Eine Parklücke ist häufig an ihrem vorderen und/oder ihrem hinteren Ende durch ein anderes abgestelltes Kraftfahrzeug begrenzt. Da sich die Positionen dieser anderen Kraftfahrzeuge verändern können, während das Kraftfahrzeug abgestellt ist, wird insbesondere das Ausparken erleichtert, wenn die Steuereinheit ausgestaltet ist, Abstandsinformationen, die Informationen über einen oder mehrere Abstände des Kraftfahrzeugs von Gegenständen umfassen, die die Parklücke begrenzen, einer Abstandsermittlungseinheit zu erfassen und auszuwerten, um anhand der erfassten Abstandsinformationen eine Antriebsrichtungsempfehlung zu ermitteln und auszugeben. Ist beispielsweise der Abstand des Kraftfahrzeugs von einem begrenzenden Gegenstand zu gering, um einen Rangiervorgang in Richtung auf den Gegenstand auszuführen, so wird der Fahrer über eine Ausgabeeinheit informiert, das Kraftfahrzeug in einer Fahrtrichtung weg von dem Gegenstand zu rangieren. Bei der Ausgabeeinheit kann es sich um eine beliebige Anzeigevorrichtung (z.B. Bildschirm oder Touch-Screen) oder einen Lautsprecher handeln, über den akustische Informationen ausgegeben werden. Die Ausgabe der Steuereinheit wird häufig über eine Schnittstelle mittels eines Signals in elektronischer Form erfolgen, das von einem anderen System des Kraftfahrzeugs verarbeitet und in audiovisuelle Informationen für den Fahrer umgewandelt werden kann.

Besonders vorteilhaft ist eine Weiterbildung, bei der die Abstandsermittlungseinheit Abstandsmesssensoren an einem vorderen Ende und an einem hinteren Ende des Kraftfahrzeugs umfasst und die Abstandsinformationen Informationen über einen minimalen Abstand des Kraftfahrzeugs von einer vorderen Begrenzung und einen minimalen Abstand von einer hinteren Begrenzung der Parklücke umfassen. Hierdurch ist es möglich, dem Fahrer auch in den Fällen, in denen das Kraftfahrzeug in einer Parklücke steht, die auf beiden Seiten begrenzt ist, jeweils die Antriebsrichtung vorschlagen, in der das Kraftfahrzeug einen maximalen Weg beim Rangieren zurücklegen kann. Hierdurch wird erreicht, dass die Anzahl der Rangiervorgänge so gering wie möglich gehalten wird.

Eine andere bevorzugte Ausführungsform der Erfindung sieht vor, dass die Steuereinheit einen Vergleicher zum Vergleichen des einen Abstands oder der mehreren Abstände mit mindestens einem Abstandsschwellenwert umfasst und ein Warnsignal ausgegeben wird, wenn der mindestens eine Abstand oder einer der mehreren Abstände den Abstandsschwellenwert unterschreitet. Das Warnsignal kann dabei je nach Schwellwertsüber- bzw. -unterschreitung unterschiedlich sein.

Bei einer Weiterbildung ist vorgesehen, dass die Steuereinheit mit einer Bremsanlage des Kraftfahrzeugs gekoppelt ist und mittels der Steuereinheit beim Unterschreiten des Abstandsschwellenwertes eine Bewegung des Kraftfahrzeugs aktiv gebremst und/oder unterbunden wird, die zu einer weiteren Verringerung des einen Abstands oder des einen der mehreren Abstände führt. Bei dieser Ausführungsform wird sichergestellt, dass das Kraftfahrzeug keine die Parklücke begrenzenden Gegenstände berührt. Hierdurch wird eine Unfallgefahr beim Einparken deutlich reduziert oder sogar vollständig beseitigt.

Bei einer weiteren Ausführung der Erfindung kann die Steuereinheit Signale von einem oder mehreren Sensoren empfangen, die Kraftfahrzeugzustände und/oder Ereignisse erfassen, wobei die Steuereinheit ausgelegt ist, die Signale auszuwerten und abhängig von der Auswertung Funktionen des Parklenkassistenzsystems zu beeinflussen. Bei einer Ausführungsform der Erfindung ist beispielsweise vorgesehen, dass die Signale eine Information über einen Lenkeingriff eines Fahrers des Kraftfahrzeugs umfassen und das Beeinflussen der Funktionen des Parklenkassistenzsystems ein Deaktivieren des Parklenkassistenzsystems beim Feststellen des Lenkeingriffs umfasst. Die Sensoren können beispielsweise eine aktive Lenkbewegung des Fahrers erfassen. Sobald der Fahrer die Lenkung betätigt, wird der Parklenkassistenz deaktiviert. So kann ein Fahrer insbesondere in Gefahrensituationen jederzeit in die Lenkung eingreifen, ohne dass das Parklenkassistenzsystem diesen Lenkeingriff behindert. Dies ermöglicht einem Fahrer, jederzeit die vollständige Kontrolle über das Kraftfahrzeug zu behalten. Es ist auch möglich, dass bei einem Eingriff des Fahrers, ob gewollt oder ungewollt, ein Warnsignal erfolgt und danach erst die Abschaltung erfolgt. Bei geringen Eingriffen, z.B. versehentliches Berühren oder Abbremsen des Lenkrades, setzt das Parklenkassistenzsystem dann den Parkverlauf fort. Dabei wird dann ggf. die Einparksollfahrspur neu berechnet.

Bei einer Ausführungsform der Erfindung ist ferner vorgesehen, dass die Signale eine Information über eine Geschwindigkeit des Kraftfahrzeugs umfassen und das Beeinflussen der Funktionen des Parklenkassistenzsystems ein Deaktivieren des Parklenkassistenzsystems beim Überschreiten eines vorfestgelegten Geschwindigkeitswertes umfasst. Zusätzlich kann ggf. vor dem Erreichen dieses Schwellwertes ein weiterer, mindestens zweiter Schwellwert vorgesehen sein, bei dem der Fahrer bereits über das mögliche Deaktivieren des Parklenkassistenzsystem informiert wird, sofern der Fahrer die Geschwindigkeit weiter erhöht. Diese Warnung kann je nach dem Maß der Überschreitung des weiteren Schwellwertes in der Intensität variiert werden , d.h. beispielsweise wird mit größer Überschreitung eine höhere Intensität gewählt.

Insbesondere beim Ausparken des Kraftfahrzeugs kann beispielsweise vorgesehen sein, dass der Fahrer, sobald das Kraftfahrzeug eine Ausrichtung erreicht hat, die es ihm ermöglicht, das Kraftfahrzeug aus der Parklücke zu fahren, dies tut und hierbei die Geschwindigkeit des Kraftfahrzeugs einer normalen Fahrgeschwindigkeit annähert. Da Einparkvorgänge nur mit geringer Geschwindigkeit ausgeführt werden, kann das Parklenkassistenzsystem deaktiviert werden, sobald eine bestimmte Geschwindigkeit überschritten wird. Andere Kraftfahrzeugzustände oder Ereignisse können ebenfalls erfasst werden und einzeln oder in Kombination verwendet werden, um das Parklenkassistenzsystem zu deaktivieren oder auch zu aktivieren oder weitere Funktionen zu beeinflussen..

Bei einer besonders bevorzugten Ausführungsform der Erfindung umfasst die Steuereinheit eine Ausrichtungsbestimmungseinheit, die eine aktuelle Ausrichtung des Kraftfahrzeugs mit einer Sollausrichtung vergleicht und bei einer Übereinstimmung der aktuellen Ausrichtung mit der Sollausrichtung den mindestens einen Aktor so steuert, dass die lenkbaren Räder in eine nicht eingelenkte Mittelstellung bewegt werden. Bei dieser Ausführungsform werden die Räder, sobald das Kraftfahrzeug seine Sollausrichtung erreicht hat, in eine Mittelstellung, die einer Geradeausfahrt des Kraftfahrzeugs entspricht, gelenkt. Am Ende des Ausrichtungsvorgangs ist das Kraftfahrzeug somit für eine Fahrt parallel zur seitlichen Begrenzung der Parklücke vorbereitet. Hierdurch kann das Kraftfahrzeug dann einfach in eine mittlere Position bezogen auf die Länge der Parklücke gefahren werden.

Unerwünschte Einparkbewegungen können bei einer Ausführungsform vermieden werden, bei der die Signale eine Information über einen Bewegungszustand und/oder Bremszustand des Kraftfahrzeugs umfassen und das Beeinflussen der Funktionen des Parklenkassistenzsystems ein Unterbinden der Steuerung des mindestens einen Aktors zum Herbeiführen einer maximalen Einlenkung der lenkbaren Räder umfasst, wenn das Kraftfahrzeug in Bewegung ist und/oder nicht gebremst ist. So kann beispielsweise in Situationen, in denen das Kraftfahrzeug rückwärts rollt und der Fahrer bei betätigter Kupplung den Vorwärtsgang einlegt, verhindert werden, dass das Parklenkassistenzsystem während der Rückwärtsbewegung bereits den mindestens einen Aktor betätigt, um die Räder zum anderen maximalen Einschlag zu bewegen. Bei dieser Ausführungsform führt das Parklenkassistenzsystem die Lenkbewegungen, die beispielsweise zu einem maximalen Lenkeinschlag führen, nur aus, wenn das Kraftfahrzeug gebremst und/oder in Ruhe befindlich ist. Lediglich die Lenkbewegung, die die Räder in eine Mittelstellung bei erfolgter Ausrichtung des Kraftfahrzeugs überführt, ist auch im bewegten Zustand des Kraftfahrzeugs möglich.

Die Merkmale des erfindungsgemäßen Betriebsverfahrens weisen dieselben Vorteile wie die Merkmale des Parklenkassistenzsystems auf.

Nachfolgend wird die Erfindung anhand eines bevorzugten Ausführungsbeispiels unter Bezugnahme auf eine Zeichnung näher erläutert. Hierbei zeigen:
- Fig. 1: eine schematische Draufsicht auf eine Parklücke und ein Kraftfahrzeug sowie eine Sollbahn zum Einparken des Kraftfahrzeugs in die Parklücke;
- Fig. 2a-2c: schematisch einen Ausparkvorgang eines Kraftfahrzeugs aus einer Parklücke; und
- Fig. 3: eine schematische Darstellung eines Kraftfahrzeugs mit einem Parklenkassistenzsystem.

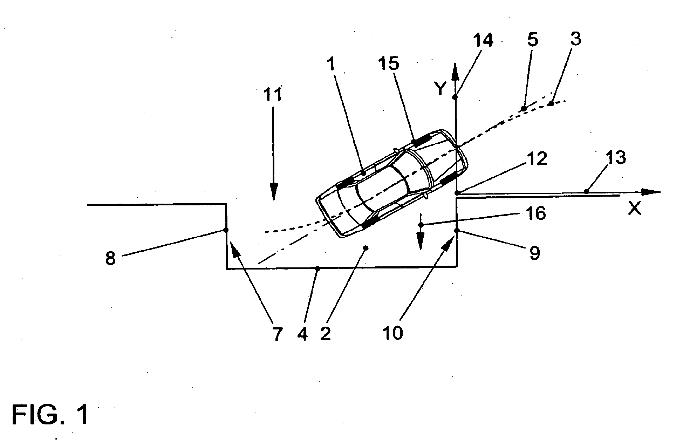

In Fig. 1 ist ein Kraftfahrzeug 1 während eines Einparkvorgangs in eine Parklücke 2 dargestellt. Das Kraftfahrzeug 1 bewegt sich entlang einer von einem Einparksystem ermittelten Einparktrajektorie 3. Ist eine Ausdehnung der Parklücke 2 entlang einer seitlichen Längsbegrenzung 4 nicht ausreichend, so kann das Kraftfahrzeug 1 nicht so in die Parklücke 2 eingeparkt werden, dass eine Längsachse 5 des Kraftfahrzeugs 1 am Ende eines einzügigen Einparkvorgangs parallel zu der seitlichen Längsbegrenzung 4 der Parklücke 2 ausgerichtet ist.

Die Parklücke 2 ist an einem hinteren Ende 7 durch eine hintere Begrenzung 8 begrenzt. Eine vordere Begrenzung 9 begrenzt die Parklücke an einem vorderen Ende 10. Die hintere Begrenzung 8 und die vordere Begrenzung 9 sind in der Regel durch andere Kraftfahrzeuge gebildet. An einer der seitlichen Längsbegrenzung 4 der Parklücke 2 gegenüberliegenden offenen Seite 11 ist die Parklücke 2 offen.

Mit der Parklücke 2 ist ein Koordinatensystem 6 verknüpft. Ein Ursprung 12 des Koordinatensystems 6 fällt mit einem Kreuzungspunkt der gegenüberliegenden offenen Seite 11 der Parklücke 2 mit einer Verlängerung der vorderen Begrenzung 9 der Parklücke 2 zusammen. Eine x-Achse 13 des Koordinatensystems 6 ist parallel zu der seitlichen Längsbegrenzung 4 der Parklücke ausgerichtet. Eine positive Richtung der x-Achse 13 weist von der hinteren Begrenzung 8 zu der vorderen Begrenzung 9 der Parklücke 2. Das Koordinatensystem 6 ist ein rechtshändiges Koordinatensystem. Eine y-Achse 14 des Koordinatensystems 6 ist somit senkrecht zu der seitlichen Längsbegrenzung 4 der Parklücke 2 ausgerichtet. Eine positive Y-Richtung weist von der seitlichen Längsbegrenzung 4 zu der gegenüberliegenden offenen Seite 11 der Parklücke 2. Eine Ausrichtung des Kraftfahrzeugs 1 kann bezogen auf das Koordinatensystem 6 ermittelt werden, indem ein Winkel zwischen der x-Achse und der Kraftfahrzeuglängsachse 5 ermittelt wird.

Ist die Längsausdehnung entlang der seitlichen Längsbegrenzung 4 der Parklücke 2 nicht ausreichend, so dass das Kraftfahrzeug 1 am Ende eines ersten Einparkzuges bezüglich seiner Kraftfahrzeuglängsachse 5 nicht parallel zu der seitlichen Längsbegrenzung 4 der Parklücke 2 ausgerichtet werden kann. Das Kraftfahrzeug 1 muss in einem solchen Fall anschließend in der Parklücke 2 rangiert werden, um es so auszurichten, dass die Kraftfahrzeuglängsachse 5 parallel zu der seitlichen Längsbegrenzung 4 ausgerichtet ist. Ein Parklenkassistenzsystem wird hierfür von dem Einparksystem aktiviert. Die Aktivierung erfolgt vorzugsweise mit einem elektronischen Signal. Das Einparksystem übergibt an das Parklenkassistenzsystem ferner eine Änderungsrichtung. Die Ausrichtung des Kraftfahrzeugs 1 ist so zu verändern, dass die Kraftfahrzeuglängsachse 5 parallel zu der seitlichen Längsbegrenzung 4 der Parklücke 2 ausgerichtet ist. Mit Hilfe von Sensoren, die an einem Schalthebel bzw. Getriebe oder an einem Fahrtrichtungswahlschalter eines Automatikgetriebes angeordnet sind, wird eine ausgewählte bzw. eingestellte Antriebsrichtung erfasst. Eine Steuereinheit des Parklenkassistenzsystems steuert einen Aktor, der lenkbare Räder 15 des Kraftfahrzeugs 1 einlenken kann. Ist ein eingelegter Vorwärtsgang bzw. eine Vorwärtsfahrtrichtung als eingestellte Antriebsrichtung erfasst worden, so werden die lenkbaren Räder 15 maximal in der Richtung eingelenkt (bzw. eingeschlagen), die der Änderungsrichtung entspricht. Dies bedeutet in dem in Fig. 1 dargestellten Beispiel für das Kraftfahrzeug 1, welches sich nach dem Einparkvorgang an dem hinteren Ende 7 der Parklücke 2 in einer noch nicht ausgerichteten Stellung befindet, dass die lenkbaren Vorderräder 15 maximal nach rechts eingelenkt werden, da die Änderungsrichtung rechts ist, wie mittels eines Pfeils 16 angedeutet ist. Das Kraftfahrzeug 1 wird anschließend durch einen Fahrer vorwärts bewegt. Dies geschieht solange, bis die Kraftfahrzeuglängsachse 5 parallel zu der seitlichen Längsbegrenzung 4 der Parklücke 2 ausgerichtet ist oder das Kraftfahrzeug sich an dem vorderen Ende 10 der Parklücke 2 befindet. Im letzteren Fall legt der Fahrer den Rückwärtsgang ein, so dass als Antriebsrichtung rückwärts erfasst wird. Die Steuereinheit steuert hieraufhin den Aktor so, dass die lenkbaren Vorderräder 15 entgegen der Änderungsrichtung, d.h. maximal nach links, eingeschlagen werden. Der Fahrer bewegt anschließend das Kraftfahrzeug rückwärts. Das Vor- und Zurücksetzen kann abwechseln so oft wiederholt werden, bis die Kraftfahrzeuglängsachse 5 bezüglich der seitlichen Begrenzung 4 der Parklücke 2 parallel ausgerichtet ist. Sobald die Kraftfahrzeuglängsachse 5 parallel zu der seitlichen Begrenzung 4 der Parklücke 2 ausgerichtet ist, steuert die Steuereinheit den Aktor so, dass die lenkbaren Vorderräder 15 in eine Mittelstellung gelenkt werden, die einer Stellung bei einer Geradeausfahrt des Kraftfahrzeugs 1 entspricht. So kann der Fahrer das Kraftfahrzeug 1 mittig in der Parklücke 2 positionieren.

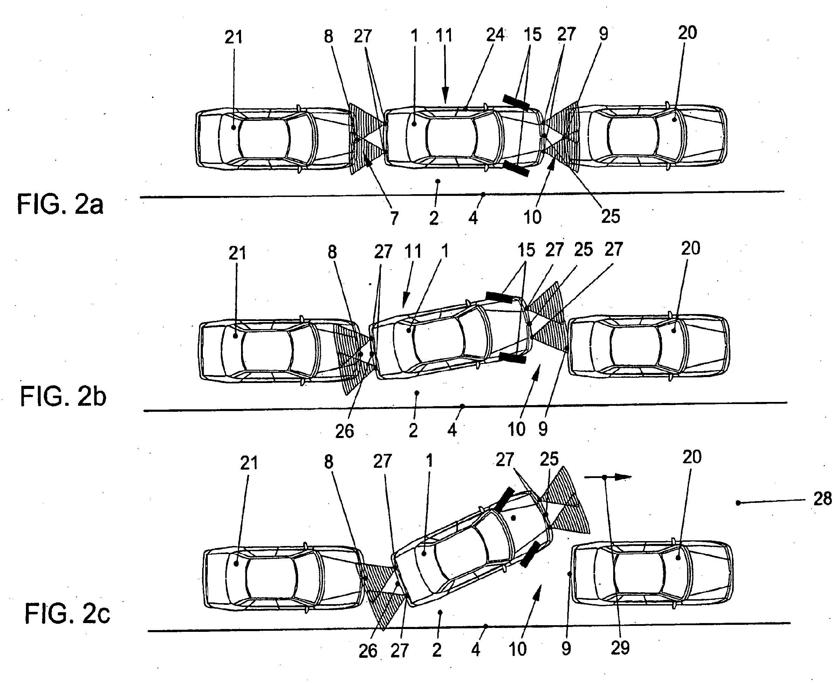

Anhand der Fig. 2a-2c soll ein Einsatz eines Parklenkassistenzsystems zum Ausparken aus einer Parklücke 2 erläutert werden. Technisch gleiche Merkmale sind in sämtlichen Figuren mit denselben Bezugszeichen versehen. Ein Kraftfahrzeug 1 befindet sich in der Parklücke 2, die an einem vorderen Ende 10 durch ein weiteres Kraftfahrzeug 20 begrenzt ist. Eine hintere Begrenzung 8 ist durch ein anderes Kraftfahrzeug 21 vorgegeben. Eine seitliche Längsbegrenzung 4 der Parklücke 2 bildet ein Bordstein 22. Nachdem ein Fahrer das Kraftfahrzeug 1 in Betrieb genommen hat, signalisiert er durch ein Betätigen eines Schalters, der ein Fahrtrichtungsänderungsanzeigesignal an einer Seite 24 des Kraftfahrzeugs 1 aktiviert, die zu der offenen Seite 11 der Parklücke 2 weist, dass er nach links ausparken will. Hierdurch wird das Parklenkassistenzsystem aktiviert. Mit Hilfe einer Abstandsermittlungseinheit, die Messdaten von Abstandmesssensoren 27, die an einem vorderen Ende 25 des Kraftfahrzeugs 1 und an einem hinteren Ende 26 des Kraftfahrzeugs 1 angeordnet sind, auswertet, wird ein Abstand des Kraftfahrzeugs 1 zu der vorderen Begrenzung 9 und der hinteren Begrenzung 8 der Parklücke 2 ermittelt. Die Abstandsmesssensoren 27 sind vorzugsweise als Ultraschallsensoren ausgebildet. Es können jedoch auch beliebige andere Abstandsmesssensoren, beispielsweise Radarsensoren, Laserentfernungsmesssensoren usw., verwendet werden.

Die Steuereinheit ermittelt aus Abstandsinformationen der Abstandsermittlungseinheit, ob der Abstand vor dem Kraftfahrzeug 1 zu der vorderen Begrenzung 9 oder der Abstand hinter dem Kraftfahrzeug 1 zu der hinteren Begrenzung 8 der Parklücke 2 größer ist. Dem Fahrer wird daraufhin eine bevorzugte Fahrtrichtung mittels einer Ausgabeeinheit ausgegeben. Die Ausgabeeinheit kann eine visuelle oder akustische Ausgabeeinheit sein, die beispielsweise über einen Fahrzeugbus informationstechnisch mit der Steuereinheit verbunden ist. In dem vorliegenden Fall gibt das Parklenkassistenzsystem dem Fahrer die Empfehlung, als Antriebsrichtung zunächst rückwärts zu wählen. Der Fahrer legt daraufhin den Rückwärtsgang ein. Diese Einstellung der Antriebsrichtung rückwärts wird von dem Parklenkassistenzsystem erfasst, woraufhin die Steuereinheit einen Aktor steuert, der die lenkbaren Vorderräder 15 maximal nach rechts einlenkt. Diese Richtung ist entgegengesetzt zu der Änderungsrichtung, die nach links weist und mittels eines Pfeils 16 angedeutet ist. Der Fahrer bewegt nun das Kraftfahrzeug 1 rückwärts, in eine Position, die in Fig. 2b dargestellt ist.

Ein Vergleicher vergleicht den Abstand des Kraftfahrzeugs 1 von der vorderen Begrenzung 9 und der hinteren Begrenzung 8 der Parklücke 2. Wird ein Abstandsschwellenwert unterschritten, so wird eine Warnung über die Ausgabeeinheit ausgegeben. Die ausgegebene Warnung kann eine Information über den tatsächlichen Abstand umfassen. Beispielsweise kann zunächst ein zeitlich unterbrochener Wamton ausgegeben werden, der bei einem geringeren Abstand des Kraftfahrzeugs 1 von der vorderen Begrenzung 9 oder der hinteren Begrenzung 8 in einem Dauerton übergeht. Der Fahrer stoppt daraufhin das Kraftfahrzeug 1. Anschließend wird der Vorwärtsgang eingelegt. Das Parklenkassistenzsystem erfasst, dass eine andere Antriebsrichtung eingestellt ist. Daraufhin steuert die Steuereinheit den Aktor so, dass die lenkbaren vorderen Räder 15 maximal nach links eingelenkt werden, was der Richtung entspricht, in der eine Änderung der Ausrichtung des Kraftfahrzeugs 1 erfolgen soll. Anschließend bewegt der Fahrer das Kraftfahrzeug 1 vorwärts. Hierbei wird eine Ausrichtung des Kraftfahrzeugs 1 erreicht, die ausreicht, um ohne Schwierigkeiten aus der Parklücke 2 in einem Zug ausparken zu können. Der Fahrer wird somit das Kraftfahrzeug 1 auf eine Fahrbahn 28 bewegen und seine Geschwindigkeit erhöhen. Ferner wird er, um das Kraftfahrzeug 1 in einer Fahrtrichtung 29 parallel zu einem Straßenverlauf auszurichten, die Lenkung betätigen. Das Parklenkassistenzsystem wird beispielsweise beim Überschreiten einer vorgegebenen Geschwindigkeit, beispielsweise 10 km/h, automatisch deaktiviert. Ebenso führt ein Eingriff des Fahrers in die Kraftfahrzeuglenkung dazu, dass das Parklenkassistenzsystem deaktiviert wird.

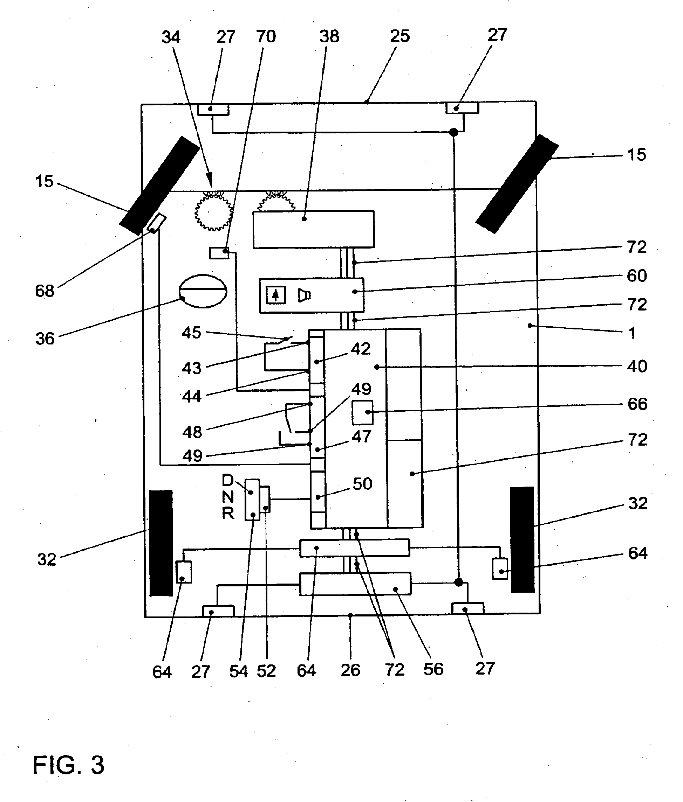

In Fig. 3 ist schematisch ein Kraftfahrzeug 1 mit einem Parklenkassistenzsystem 30 dargestellt. Das Kraftfahrzeug 1 umfasst Hinterräder 32 und lenkbare Vorderräder 15. Die lenkbaren Vorderräder 15 können über ein Lenkungssystem 34, das ein Lenkrad 36 umfasst, eingelenkt werden. Zusätzlich können die lenkbaren Vorderräder 15 über einen Aktor 38 eingelenkt werden. Der Aktor 38 kann von einer Steuereinheit 40 des Parklenkassistenzsystems 30 gesteuert werden. Bei dem Aktor 38 kann es sich um ein Element des Lenkungssystems 34 handeln, das beispielsweise verwendet wird, um eine Lenkbewegung des Lenkrads 36 zu unterstützen. Das Parklenksystem 30 umfasst Mittel zum Erfassen eines Aktivierungssignals 42. Diese umfassen einen Eingang 43 und einen Ausgang 44. Der Eingang 43 und der Ausgang 44 sind über einen Schalter 45 verbunden. Wird der Schalter 45 geschlossen, so wir eine elektrische Verbindung zwischen dem Eingang 43 und dem Ausgang 44 ausgebildet. Auf diese Wiese empfangen die Mittel zum Empfangen eines Aktivierungssignals 42 ein Aktivierungssignal und aktivieren das Parklenkassistenzsystem 30.

Über einen Wechseltastschalter 46, der von einem Fahrer betätigt wird, kann eine Änderungsrichtung eingestellt werden, die vorgibt, in welche Richtung die Ausrichtung des Kraftfahrzeuges 1 mit Hilfe des Parklenkassistenzsystems 30 verändert werden soll. Der Wechseltastschalter 46 ist mit Mitteln zum Ermitteln der Änderungsrichtung 47 verbunden. In der dargestellten Ausführungsform sind die Mittel zum Ermitteln der Änderungsrichtung 47 so ausgestaltet, dass sie einen weiteren Ausgang 48 und zwei weitere Eingänge 49 aufweisen. Wird der Wechseltastschalter 46 betätigt, wird eine elektrische Verbindung zwischen dem weiteren Ausgang 48 und einem der weiteren Eingänge 49 ausgebildet. Je nach dem, an welchem der weiteren Eingänge 49 ein Signal erfasst wird, wird die Änderungsrichtung festgelegt. Bei anderen Ausführungsformen können die Mittel zum Ermitteln der Änderungsrichtung auch Signale unterschiedlicher Sensoren und/oder Informationen unterschiedlicher Steuergeräte des Kraftfahrzeugs auswerten, um anhand vorgegebener Kriterien selbstständig automatisch zu ermitteln, in welche Richtung die Ausrichtung verändert werden soll. Verfügt das Kraftfahrzeug beispielsweise zusätzlich über eine Einparkhilfe, die das Kraftfahrzeug einzügig in eine parallele Parklücke rückwärts einparken kann, so können Informationen dieser Parkhilfe verwendet werden, um die Änderungsrichtung zu ermitteln. Ebenso können Fahrzustandsmessdaten erfasst und gegebenenfalls gespeichert werden, um anhand dieser Daten die Änderungsrichtung zu ermitteln. Dies ist insbesondere dann hilfreich, wenn das Parklenkassistenzsystem zum Ausparken verwendet werden soll. Wird das Parklenkassistenzsystem aktiviert, nachdem das Kraftfahrzeug geparkt war, so kann die Änderungsrichtung in der Regel aus den Daten über den zuvor erfolgten Einparkvorgang abgeleitet werden. Wurde das Kraftfahrzeug beispielsweise beim Einparken in eine parallele Parklücke am rechten Fahrbahnrand rückwärts eingeparkt, so war beim Einparkvorgang die Änderungsrichtung rechts. Zum Ausparken muss nun folglich die Änderungsrichtung links sein.

Mittel zum Erfassen einer eingestellten Antriebsrichtung 50 sind mit einem Sensor 52 an einem Wahlhebel 54 eines Automatikgetriebes gekoppelt. Der Sensor 52 erfasst die Stellung des Wahlhebels 54. Das Kraftfahrzeug 1 verfügt ferner über eine Abstandsermittlungseinheit 56. Die Abstandsermittlungseinheit 56 umfasst Abstandssensoren 27, die an einem vorderen Ende 25 und an einem hinteren Ende 26 des Kraftfahrzeugs 1 angeordnet sind. Die Abstandsermittlungseinheit 56 ermittelt Abstände von Gegenständen, die die Parklücke, in die das Kraftfahrzeug ein- oder ausgeparkt wird, begrenzen. Die Steuereinheit 40 ist so ausgestaltet, dass sie Abstandsinformationen der Abstandsermittlungseinheit 56 empfangen und auswerten kann. Anhand der empfangenen Abstandsinformationen ermittelt die Steuereinheit eine Fahrtrichtungsempfehlung, in der das Kraftfahrzeug 1 beim Rangieren zum Ausrichten des Kraftfahrzeugs 1 bevorzugt bewegt werden soll. Hierfür stellt die Steuereinheit 40 eine Antriebsrichtungsempfehlung zur Verfügung, die über eine Ausgabeeinheit 60 ausgegeben wird. Die Ausgabeeinheit 60 kann eine beliebige audiovisuelle Ausgabeeinheit sein. Die Ausgabeeinheit 60 ist über ein Fahrzeugbussystem 62 mit der Steuereinheit 40 des Parklenkassistenzsystems 30 informationstechnisch ebenso wie der Aktor 38 und die Abstandsermittlungseinheit 56 verbunden. Die Steuereinheit 40 steuert ferner den Aktor 38 in Abhängigkeit von der erfassten eingestellten Antriebsrichtung und der ermittelten Änderungsrichtung.

Um zu vermeiden, dass das Kraftfahrzeug 1 an die vordere oder hintere Begrenzung der Parklücke anstößt, ist die Steuereinheit mit einer Bremsanlage 64 über das Fahrzeugbussystem 62 gekoppelt. Ermittelt die Steuereinheit 40 mittels eines Vergleichers 66 anhand der Abstandsinformationen, dass ein Abstand zu einem Gegenstand, der die Parklücke begrenzt, einen Abstandsschwellenwert unterschreitet, so kann die Steuereinheit 40 zum einen eine Warnung über die Ausgabeeinheit 60 ausgeben und/oder zum andern aktiv die Bewegung des Kraftfahrzeugs 1 über die Bremsanlage 64 bremsen. Ferner kann vorgesehen sein, dass die Steuereinheit den Aktor 38 zum Bewirken eines maximalen Einlenkens der Vorderräder 15 nur steuern kann, wenn das Kraftfahrzeug 1 gebremst ist. Ein Radimpulssensor 68 liefert eine Geschwindigkeitsinformation an die Steuereinheit 40, so dass bei einem Überschreiten einer vorgegebenen Geschwindigkeit, beispielsweise 10 km/h, das Parklenkassistenzsystem 30 deaktiviert werden kann. Es ist ein zusätzlicher Sensor 70 an dem Lenkungssystem 34 angeordnet, mit dem Lenkeingriffe eines Fahrers detektiert werden können. Wird eine Lenkbewegung des Fahrers festgestellt, während das Parklenkassistenzsystem 30 aktiv ist, so wird dieses automatisch deaktiviert.

Wird das Kraftfahrzeug 1 eingeparkt, so ermittelt eine Ausrichtungsbestimmungseinheit 72, ob eine aktuelle Ausrichtung des Kraftfahrzeugs mit einer Sollausrichtung übereinstimmt. Die Ausrichtungsbestimmungseinheit ist mit der Steuereinheit 40 über das Fahrzeugbussystem 62 verbunden, so dass die Steuereinheit den Aktor 38 so steuern kann, dass die lenkbaren Räder 15 in eine nicht eingelenkt Mittelstellung bewegt werden, wenn die aktuelle Ausrichtung des Kraftfahrzeugs 1 mit der Sollausrichtung übereinstimmt.

Der Aktor, die Ausgabeeinheit, die Abstandsermittlungseinheit sowie die Sensoren und Schalter sind in der beschriebenen Ausführungsform als selbstständige Einheiten des Kraftfahrzeugs beschrieben. Die Schalter können in Steuergeräte integriert sein, die über das Fahrzeugbussystem mit der Steuereinheit verbunden sind. Ebenso können andere Erfassungsmittel genutzt werden. Es gibt jedoch auch Ausführungsformen, bei denen diese Komponenten alle oder teilweise in beliebiger Kombination integrale Bestandteile des Parklenkassistenzsystems sind. Hierbei ist es unerheblich, dass einzelne Komponenten an unterschiedlichen Orten im Kraftfahrzeug angeordnet sind.

Die einzelnen Bestandteile des Parklenkassistenzsystems können ganz oder teilweise in Hard- und/oder Software ausgeführt sein und zumindest teilweise in ein Steuergerät mit einem programmierbaren Rechner integriert sein.

Die oben aufgeführten Beispiele beschreiben ein Einparken eines Kraftfahrzeuges in eine Parklücke am rechten Fahrbahnrand. Selbstverständlich gilt analog dasselbe für das Einparken in eine Parklücke am linken Fahrbahnrand.

### Bezugszeichenliste

- 1: Kraftfahrzeug
- 2: Parklücke
- 3: Einparktrajektorie
- 4: seitliche Längsbegrenzung der Parklücke
- 5: Kraftfahrzeuglängsachse
- 6: Koordinatensystem
- 7: hinteres Ende der Parklücke
- 8: hintere Begrenzung der Parklücke
- 9: vordere Begrenzung der Parklücke
- 10: vorderes Ende der Parklücke
- 11: gegenüberliegende offene Seite der Parklücke
- 12: Ursprung
- 13: x-Achse
- 14: y-Achse
- 15: lenkbare Vorderräder
- 16: Pfeil, der die Änderungsrichtung anzeigt
- 20: weiteres Kraftfahrzeug
- 21: anderes Kraftfahrzeug
- 22: Bordstein
- 24: Seite des Fahrzeugs
- 25: vorderes Ende des Kraftfahrzeugs
- 26: hinters Ende des Kraftfahrzeugs
- 27: Abstandssensoren
- 28: Fahrbahn
- 29: Fahrtrichtung
- 30: Parklenkassistenzsystem
- 32: Hinterräder
- 34: Lenkungssystem
- 36: Lenkrad
- 38: Aktor
- 40: Steuereinheit
- 42: Mittel zum Erfassen eines Aktivierungssignals
- 43: Eingang der Mittel zum Erfassen eines Aktivierungssignals
- 44: Ausgang der Mittel zum Erfassen eines Aktivierungssignals
- 45: Schalter
- 46: Wechseltastschalter
- 47: Mittel zum Ermitteln der Änderungsrichtung
- 48: weitere Ausgang (der Mittel zum Ermitteln der Änderungsrichtung)
- 49: weitere Eingänge (der Mittel zum Ermitteln der Änderungsrichtung)
- 50: Mittel zum Erfassen einer eingestellten Antriebsrichtung
- 52: Sensor am Wahlhebel eines Getriebes
- 54: Wahlhebel eines Getriebes
- 56: Abstandsermittlungseinheit
- 60: Ausgabeeinheit
- 62: Fahrzeugbussystem
- 64: Bremsanlage
- 66: Vergleicher
- 68: Radimpulssensor
- 70: zusätzlicher Sensor am Lenkungssystem
- 72: Ausrichtungsbestimmungseinheit

## Patentansprüche

1. Semiautomatisches Parklenkassistenzsystem (30) eines Kraftfahrzeugs (1) zum Unterstützen eines Ausrichtens des Kraftfahrzeugs (1) in einer Parklücke (2) umfassend
a. Mittel (46) zum Erfassen eines Aktivierungssignals;
b. Mittel (47) zum Ermitteln einer Änderungsrichtung, in der eine Ausrichtung des Kraftfahrzeugs (1) verändert werden soll;
c. eine Steuereinheit (40), die in einem aktiven Zustand des Parklenkassistenzsystems (30) mindestens einen Aktor (38) so steuert, dass lenkbare Räder (15) des Kraftfahrzeugs (1) in die Änderungsrichtung eingelenkt werden, wenn die eingestellte Antriebsrichtung vorwärts ist, und die lenkbaren Räder (15) entgegen der Änderungsrichtung eingelenkt werden, wenn die eingestellte Antriebsrichtung rückwärts ist.

2. Parklenkassistenzsystem (30) nach Anspruch 1, **dadurch gekennzeichnet, dass** die Steuereinheit (40), den mindestens einen Aktor (38) so steuert, dass lenkbare Räder (15) des Kraftfahrzeugs (1) im wesentlichen maximal in die Änderungsrichtung eingelenkt sind, wenn die eingestellte Antriebsrichtung vorwärts ist, und die lenkbaren Räder (15) im wesentlichen maximal entgegen der Änderungsrichtung eingelenkt sind, wenn die eingestellte Antriebsrichtung rückwärts ist.

3. Parklenkassistenzsystem (30) nach Anspruch 1 oder 2, **dadurch gekennzeichnet, dass** die Steuereinheit (40) ausgestaltet ist, Abstandsinformationen, die Informationen über einen oder mehrere Abstände des Kraftfahrzeugs (1) von Gegenständen umfassen, die die Parklücke (2) begrenzen, einer Abstandsermittlungseinheit (56) zu erfassen und auszuwerten, um anhand der erfassten Abstandsinformationen eine Antriebsrichtungsempfehlung zu ermitteln und auszugeben.

4. Parklenkassistenzsystem (30) nach Anspruch 3, **dadurch gekennzeichnet, dass** die Abstandsermittlungseinheit (56) Abstandsmesssensoren an einem vorderen Ende (25) und an einem hinteren Ende (26) des Kraftfahrzeugs (1) umfasst und die Abstandsinformationen Informationen über mindestens einen Abstand des Kraftfahrzeugs (1) von einer vorderen Begrenzung und mindestens einen Abstand von einer hinteren Begrenzung der Parklücke (2) umfassen.

5. Parklenkassistenzsystem (30) nach einem der Ansprüche 3 oder 4, **dadurch gekennzeichnet, dass** die Steuereinheit (40) einen Vergleicher (66) zum Vergleichen des einen Abstands oder der mehreren Abstände mit mindestens einem Abstandsschwellenwert umfasst und mindestens ein Warnsignal ausgegeben wird, wenn der eine Abstand oder einer der mehreren Abstände den Abstandsschwellenwert unterschreitet.

6. Parklenkassistenzsystem (30) nach Anspruch 5, **dadurch gekennzeichnet, dass** die Steuereinheit (40) mit einer Bremsanlage des Kraftfahrzeugs (1) gekoppelt ist und mittels der Steuereinheit (40) beim Unterschreiten des Abstandsschwellenwertes eine Bewegung des Kraftfahrzeugs (1) aktiv gebremst und/oder unterbunden wird, die zu einer weiteren Verringerung des einen Abstands oder des einen der mehreren Abstände führt.

7. Parklenkassistenzsystem (30) nach einem der vorangehenden Ansprüche, **dadurch gekennzeichnet, dass** die Steuereinheit (40) Signale von einem oder mehreren Sensoren (68, 70) empfangen kann, die Kraftfahrzeugzustände und/oder Ereignisse erfassen, wobei die Steuereinheit (40) ausgelegt ist, die Signale auszuwerten und abhängig von der Auswertung Funktionen des Parklenkassistenzsystems (30) zu beeinflussen.

8. Parklenkassistenzsystem (30) nach Anspruch 7, **dadurch gekennzeichnet, dass** die Signale eine Information über einen Lenkeingriff eines Fahrers des Kraftfahrzeugs (1) umfassen und das Beeinflussen der Funktionen des Parklenkassistenzsystems (30) ein Deaktivieren des Parklenkassistenzsystems (30) beim Feststellen des Lenkeingriffs umfasst.

9. Parklenkassistenzsystem (30) nach Anspruch 7 oder 8, **dadurch gekennzeichnet, dass** die Signale eine Information über eine Geschwindigkeit des Kraftfahrzeugs (1) umfassen und das Beeinflussen der Funktionen des Parklenkassistenzsystems (30) ein Deaktivieren des Parklenkassistenzsystems (30) beim Überschreiten eines vorfestgelegten Geschwindigkeitswertes umfasst.

10. Parklenkassistenzsystem (30) nach einem der vorangehenden Ansprüche, **dadurch gekennzeichnet, dass** die Steuereinheit (40) eine Ausrichtungsbestimmungseinheit (72) umfasst, die eine aktuelle Ausrichtung des Kraftfahrzeugs (1) mit einer Sollausrichtung vergleicht und bei einer Übereinstimmung der aktuellen Ausrichtung mit der Sollausrichtung den mindestens einen Aktor (38) so steuert, dass die lenkbaren Räder (15) in eine im wesentlichen nicht eingelenkte Mittelstellung bewegt werden.

11. Parklenkassistenzsystem (30) nach einem der Ansprüche 7 bis 10, **dadurch gekennzeichnet, dass** die Signale eine Information über einen Bewegungszustand und/oder Bremszustand des Kraftfahrzeugs (1) umfassen und das Beeinflussen der Funktionen des Parklenkassistenzsystems (30) ein Unterbinden der Steuerung des mindestens einen Aktors (38) zum Herbeiführen einer Einlenkung der lenkbaren Räder (15) umfasst, wenn das Kraftfahrzeug (1) in Bewegung ist und/oder nicht gebremst ist.

12. Verfahren zum Betreiben eines semiautomatischen Parklenkassistenzsystems (30) eines Kraftfahrzeugs (1) zum Unterstützen eines Ausrichtens des Kraftfahrzeugs (1) in einer Parklücke (2) umfassend
a. Erfassen eines Aktivierungssignals;
b. Ermitteln einer Änderungsrichtung, in der eine Ausrichtung des Kraftfahrzeugs (1) verändert werden soll; und
c. Steuern mindestens eines Aktors (38) mittels einer Steuereinheit (40) in einem aktiven Zustand des Parklenkassistenzsystems (30), so dass lenkbare Räder (15) des Kraftfahrzeugs (1) in die Änderungsrichtung eingelenkt werden, wenn die eingestellte Antriebsrichtung vorwärts ist, und die lenkbaren Räder (15) entgegen der Änderungsrichtung eingelenkt werden, wenn die eingestellte Antriebsrichtung rückwärts ist.

13. Verfahren nach Anspruch 12, **dadurch gekennzeichnet, dass** das Steuern mindestens eines Aktors (38) mittels einer Steuereinheit (40) in einem aktiven Zustand des Parklenkassistenzsystems (30) derart vorgenommen wird, dass lenkbare Räder (15) des Kraftfahrzeugs (1) im wesentlichen maximal in die Änderungsrichtung eingelenkt werden, wenn die eingestellte Antriebsrichtung vorwärts ist, und die lenkbaren Räder (15) im wesentlichen maximal entgegen der Änderungsrichtung eingelenkt werden, wenn die eingestellte Antriebsrichtung rückwärts ist.

14. Verfahren nach Anspruch 12 oder 13, **dadurch gekennzeichnet, dass** mittels einer Abstandsermittlungseinheit (56) Abstandinformationen, die Informationen über einen oder mehrere Abstände des Kraftfahrzeugs (1) von Gegenständen, die die Parklücke (2) begrenzen, umfassen, ermittelt werden und von der Steuereinheit (40) eine Antriebsrichtungsempfehlung basierend auf den Abstandsinformationen ermittelt und ausgegeben wird.

15. Verfahren nach Anspruch 14, **dadurch gekennzeichnet, dass** mittels eines Vergleichers (66) der Steuereinheit (40) der eine Abstand oder die mehreren Abstände mit einem Abstandsschwellenwert verglichen werden und ein Warnsignal ausgegeben wird, wenn der eine Abstand oder einer der mehreren Abstände den Abstandsschwellenwert unterschreitet.

16. Verfahren nach einem der Ansprüche 14 oder 15, **dadurch gekennzeichnet, dass** die Steuereinheit (40) mit einer Bremsanlage des Kraftfahrzeugs (1) gekoppelt ist und die Steuereinheit (40) beim Unterschreiten des Abstandsschwellenwertes aktiv eine Bewegung des Kraftfahrzeugs (1) bremst und/oder unterbindet, die zu einer weiteren Verringerung des einen Abstands oder des einen der mehreren Abstände führt.

17. Verfahren nach einem der Ansprüche 12 bis 16, **dadurch gekennzeichnet, dass** die Steuereinheit (40) Signale von einem oder mehreren Sensoren empfängt, die Kraftfahrzeugzustände und/oder Ereignisse erfassen, und die Steuereinheit (40) die Signale auswertet und abhängig von der Auswertung Funktionen des Parklenkassistenzsystems (30) beeinflusst.

18. Verfahren nach Anspruch 17, **dadurch gekennzeichnet, dass** die Signale eine Information über eine Geschwindigkeit des Kraftfahrzeugs (1) umfassen und die Steuereinheit (40) die Funktionen des Parklenkassistenzsystems (30) beeinflusst, indem das Parklenkassistenzsystem (30) beim Überschreiten eines vorfestgelegten Geschwindigkeitswertes deaktiviert wird.

19. Verfahren nach Anspruch 17 oder 18, **dadurch gekennzeichnet, dass** die Signale eine Information über einen Lenkeingriff eines Fahrers des Kraftfahrzeugs (1) umfassen und die Steuereinheit (40) die Funktionen des Parklenkassistenzsystems (30) beeinflusst, indem das Parklenkassistenzsystem (30) beim Feststellen des Lenkeingriffs deaktiviert wird.

20. Verfahren nach einem der Ansprüche 17 bis 19, **dadurch gekennzeichnet, dass** die Signale eine Information über einen Bewegungszustand und/oder Bremszustand des Kraftfahrzeugs (1) umfassen und das Steuergerät die Funktionen des Parklenkassistenzsystems (30) beeinflusst, indem die Steuerung des mindestens einen Aktors (38) zum Herbeiführen einer Einlenkung der lenkbaren Räder (15) unterbindet, wenn das Kraftfahrzeug (1) in Bewegung ist und/oder nicht gebremst ist.

21. Verfahren nach einem der vorangehenden Ansprüche, **dadurch gekennzeichnet, dass** die Abstandsermittlungseinheit (56) Abstandsmesssensoren an einem vorderen Ende (25) und an einem hinteren Ende (26) des Kraftfahrzeugs (1) umfasst und die Abstandsinformationen einen minimalen Abstand des Kraftfahrzeugs (1) von einer vorderen Begrenzung und einen minimalen Abstand von einer hinteren Begrenzung der Parklücke (2) umfassen.

22. Verfahren nach einem der vorangehenden Ansprüche, **dadurch gekennzeichnet, dass** die Steuereinheit (40) eine Ausrichtungsbestimmungseinheit (72) umfasst, die eine aktuelle Ausrichtung des Kraftfahrzeugs (1) mit einer Sollausrichtung vergleicht, und bei einer Übereinstimmung der aktuellen Ausrichtung mit der Sollausrichtung den mindestens einen Aktor (38) so steuert, dass die lenkbaren Räder (15) in eine nicht eingelenkte Mittelstellung bewegt werden.

## Claims

1. Semi-automatic parking steering assistance system (30) of a motor vehicle (1) for assisting orientation of the motor vehicle (1) in a parking space (2), comprising
a. means (46) for sensing an activation signal;
b. means (47) for determining a change direction in which an orientation of the motor vehicle (1) is to be changed;
c. a control unit (40) which, in an active state of the parking steering assistance system (30), controls at least one actuator (38) in such a way that steerable wheels (15) of the motor vehicle (1) are deflected in the change direction if the set drive direction is forwards and the steerable wheels (15) are deflected counter to the change direction if the set drive direction is rearwards.

2. Parking steering assistance system (30) according to Claim 1, **characterized in that** the control unit (40) controls the at least one actuator (38) in such a way that steerable wheels (15) of the motor vehicle (1) are deflected essentially to a maximum degree in the change direction if the set drive direction is forwards, and the steerable wheels (15) are deflected essentially to a maximum degree counter to the change direction if the set drive direction is rearwards.

3. Parking steering assistance system (30) according to Claim 1 or 2, **characterized in that** the control unit (40) is configured to acquire and evaluate distance information, comprising information about one or more distances of the motor vehicle (1) from objects which bound the parking space (2), of a distance-determining unit (56), in order to determine a drive direction recommendation on the basis of the acquired distance information, and to output said drive direction recommendation.

4. Parking steering assistance system (30) according to Claim 3, **characterized in that** the distance-determining unit (56) comprises distance-measuring sensors at a front end (25) and at a rear end (26) of the motor vehicle (1), and the distance information comprises information about at least one distance of the motor vehicle (1) from a front boundary, and at least one distance from a rear boundary, of the parking space (2).

5. Parking steering assistance system (30) according to one of Claims 3 or 4, **characterized in that** the control unit (40) comprises a comparator (66) for comparing the one distance or the plurality of distances with at least one distance threshold value, and at least one warning signal is output if the one distance or one of the plurality of distances undershoots the distance threshold value.

6. Parking steering assistance system (30) according to Claim 5, **characterized in that** the control unit (40) is coupled to a brake system of the motor vehicle (1), and by means of the control unit (40) a movement of the motor vehicle (1) which brings about a further reduction in the one distance or the one of the plurality of distances is actively braked and/or prevented when the distance threshold value is undershot.

7. Parking steering assistance system (30) according to one of the preceding claims, **characterized in that** the control unit (40) can receive signals from one or more sensors (68, 70) which sense motor vehicle states and/or events, wherein the control unit (40) is configured to evaluate the signals and influence functions of the parking steering assistance system (30) as a function of the evaluation.

8. Parking steering assistance system (30) according to Claim 7, **characterized in that** the signals comprise information about a steering intervention by a driver of the motor vehicle (1), and the influencing of the functions of the parking steering assistance system (30) comprises deactivation of the parking steering assistance system (30) when the steering intervention is detected.

9. Parking steering assistance system (30) according to Claim 7 or 8, **characterized in that** the signals comprise information about a speed of the motor vehicle (1), and the influencing of the functions of the parking steering assistance system (30) comprises deactivation of the parking steering assistance system (30) when a previously defined speed value is exceeded.

10. Parking steering assistance system (30) according to one of the preceding claims, **characterized in that** the control unit (40) comprises an orientation-determining unit (72) which compares a current orientation of the motor vehicle (1) with a setpoint orientation, and when the current orientation corresponds with the setpoint orientation said control unit (40) controls that at least one actuator (38) in such a way that the steerable wheels (15) are moved into an essentially non-deflected central position.

11. Parking steering assistance system (30) according to one of Claims 7 to 10, **characterized in that** the signals comprise information about a state of movement and/or braking state of the motor vehicle (1), and the influencing of the functions of the parking steering assistance system (30) comprises preventing the control of the at least one actuator (38) in order to bring about deflection of the steerable wheels (15) if the motor vehicle (1) is moving and/or is not braked.

12. Method for operating a semi-automatic parking steering assistance system (30) of a motor vehicle (1) for assisting orientation of the motor vehicle (1) in a parking space (2), comprising
a. acquiring an activation signal;
b. determining a change direction in which an orientation of the motor vehicle (1) is to be changed; and
c. controlling at least one actuator (38) by means of a control unit (40) in an active state of the parking steering assistance system (30), with the result that steerable wheels (15) of the motor vehicle (1) are deflected in the change direction if the set drive direction is forwards, and the steerable wheels (15) are deflected counter to the change direction if the set drive direction is rearwards.

13. Method according to Claim 12, **characterized in that** the control of at least one actuator (38) is performed by means of a control unit (40) in an active state of the parking steering assistance system (30) in such a way that steerable wheels (15) of the motor vehicle (1) are deflected essentially to a maximum degree in the change direction if the set drive direction is forwards, and the steerable wheels (15) are deflected essentially to a maximum degree counter to the change direction if the set drive direction is rearwards.

14. Method according to Claim 12 or 13, **characterized in that** by means of a distance-determining unit (56), distance information which comprises information about one or more distances of the motor vehicle (1) from objects which bound the parking space (2) are determined, and a drive direction recommendation is determined on the basis of the distance information and output by the control unit (40).

15. Method according to Claim 14, **characterized in that** by means of a comparator (66) of the control unit (40) the one distance or the plurality of distances is/are compared with a distance threshold value, and a warning signal is output if the one distance or one of the plurality of distances undershoots the distance threshold value.

16. Method according to one of Claims 14 or 15, **characterized in that** the control unit (40) is coupled to a brake system of the motor vehicle (1), and, the control unit (40) actively brakes and/or prevents a movement of the motor vehicle (1) which leads to a further reduction in the one distance or the one of a plurality of distances when the distance threshold value is undershot.

17. Method according to one of Claims 12 to 16, **characterized in that** the control unit (40) receives signals from one or more sensors which sense motor vehicle states and/or events, and the control unit (40) evaluates the signals and influences functions of the parking steering assistance system (30) as a function of the evaluation.

18. Method according to Claim 17, **characterized in that** the signals comprise information about a speed of the motor vehicle (1), and the control unit (40) influences the functions of the parking steering assistance system (30) **in that** the parking steering assistance system (30) is deactivated when a previously defined speed value is exceeded.

19. Method according to Claim 17 or 18, **characterized in that** the signals comprise information about a steering intervention by a driver of the motor vehicle (1), and the control unit (40) influences the functions of the parking steering assistance system (30) **in that** the parking steering assistance system (30) is deactivated when the steering intervention is detected.

20. Method according to one of Claims 17 to 19, **characterized in that** the signals comprise information about a state of movement and/or braking state of the motor vehicle (1), and the control unit influences the functions of the parking steering assistance system (30) **in that** the control of the at least one actuator (38) for bringing about deflection of the steerable wheels (15) is prevented if the motor vehicle (1) is moving and/or is not braked.

21. Method according to one of the preceding claims, **characterized in that** the distance-determining unit (56) comprises distance-measuring sensors at a front end (25) and at a rear end (26) of the motor vehicle (1), and the distance information comprises a minimum distance of the motor vehicle (1) from a front boundary and a minimum distance from a rear boundary of the parking space (2).

22. Method according to one of the preceding claims, **characterized in that** the control unit (40) comprises an orientation-determining unit (72) which compares a current orientation of the motor vehicle (1) with a setpoint orientation, and when the current orientation corresponds with the setpoint orientation said control unit (40) controls the at least one actuator (38) in such a way that the steerable wheels (15) are moved into a non-deflected central position.

## Revendications

1. Système d'assistance de guidage en stationnement semi-automatique (30) d'un véhicule automobile (1) destiné à assister une orientation du véhicule automobile (1) dans un emplacement de stationnement (2), comprenant
a) des moyens (46) destinés à détecter un signal d'activation ;
b) des moyens (47) destinés à déterminer une direction de modification dans laquelle une orientation du véhicule automobile (1) doit être modifiée ;
c) une unité de commande (40) qui, dans un état actif du système d'assistance de guidage en stationnement (30), commande au moins un actionneur (38) de telle sorte que des roues orientables (15) du véhicule automobile (1) soient braquées dans la direction de modification lorsque le sens du déplacement réglé est la marche avant, et que les roues orientables (15) soient braquées à l'opposé de la direction de modification lorsque le sens du déplacement réglé est la marche arrière.

2. Système d'assistance de guidage en stationnement (30) selon la revendication 1, **caractérisé en ce que** l'unité de commande (40) commande l'au moins un actionneur (38) de telle sorte que les roues orientables (15) du véhicule automobile (1) soient braquées pour l'essentiel au maximum dans la direction de modification lorsque le sens du déplacement réglé est la marche avant, et que les roues orientables (15) soient braquées pour l'essentiel au maximum à l'opposé de la direction de modification lorsque le sens du déplacement réglé est la marche arrière.

3. Système d'assistance de guidage en stationnement (30) selon la revendication 1 ou 2, **caractérisé en ce que** l'unité de commande (40) est configurée pour collecter des informations d'écart auprès d'une unité de détermination d'écart (56), lesquelles incluent des informations sur un ou plusieurs écarts du véhicule automobile (1) par rapport à des objets qui délimitent l'emplacement de stationnement (2), et les interpréter afin de déterminer une recommandation de sens de déplacement à l'aide des informations d'écart collectées et de la délivrer.

4. Système d'assistance de guidage en stationnement (30) selon la revendication 3, **caractérisé en ce que** l'unité de détermination d'écart (56) comprend des capteurs de mesure d'écart à une extrémité avant (25) et à une extrémité arrière (26) du véhicule automobile (1) et les informations d'écart comprennent des informations sur au moins un écart du véhicule automobile (1) par rapport à une délimitation avant et au moins un écart par rapport à une délimitation arrière de l'emplacement de stationnement (2).

5. Système d'assistance de guidage en stationnement (30) selon l'une des revendications 3 ou 4, **caractérisé en ce que** l'unité de commande (40) comprend un comparateur (66) destiné à comparer l'écart ou les plusieurs écarts avec au moins une valeur de seuil d'écart et au moins un signal d'alerte est délivré lorsque l'écart ou l'un des plusieurs écarts devient inférieur à la valeur de seuil d'écart.

6. Système d'assistance de guidage en stationnement (30) selon la revendication 5, **caractérisé en ce que** l'unité de commande (40) est connectée à un système de freinage du véhicule automobile (1) et, en cas de franchissement vers le bas de la valeur de seuil d'écart, un mouvement du véhicule automobile (1) qui entraîne une réduction supplémentaire dudit écart ou de l'un des plusieurs écarts est freiné et/ou inhibé activement au moyen de l'unité de commande (40).

7. Système d'assistance de guidage en stationnement (30) selon l'une des revendications précédentes, **caractérisé en ce que** l'unité de commande (40) peut recevoir des signaux d'un ou plusieurs capteurs (68, 70) qui détectent des états du véhicule automobile et/ou des événements, l'unité de commande (40) étant conçue pour interpréter les signaux et influencer des fonctions du système d'assistance de guidage en stationnement (30) en fonction de l'interprétation.

8. Système d'assistance de guidage en stationnement (30) selon la revendication 7, **caractérisé en ce que** les signaux comprennent une information sur une intervention sur la direction par un conducteur du véhicule automobile (1) et l'influence sur les fonctions du système d'assistance de guidage en stationnement (30) comprend une désactivation du système d'assistance de guidage en stationnement (30) en cas de constatation de l'intervention sur la direction.

9. Système d'assistance de guidage en stationnement (30) selon la revendication 7 ou 8, **caractérisé en ce que** les signaux comprennent une information sur une vitesse du véhicule automobile (1) et l'influence sur les fonctions du système d'assistance de guidage en stationnement (30) comprend une désactivation du système d'assistance de guidage en stationnement (30) en cas de dépassement d'une valeur de vitesse prédéfinie.

10. Système d'assistance de guidage en stationnement (30) selon l'une des revendications précédentes, **caractérisé en ce que** l'unité de commande (40) comprend une unité de détermination de l'orientation (72) qui compare une orientation actuelle du véhicule automobile (1) avec une orientation de consigne et, en cas de concordance de l'orientation actuelle avec l'orientation de consigne, commande l'au moins un actionneur (38) de telle sorte que les roues orientables (15) soient déplacées dans une position centrale pour l'essentiel non braquée.

11. Système d'assistance de guidage en stationnement (30) selon l'une des revendications 7 à 10, **caractérisé en ce que** les signaux comprennent une information sur un état de déplacement et/ou un état de freinage du véhicule automobile (1) et l'influence sur les fonctions du système d'assistance de guidage en stationnement (30) comprend une inhibition de la commande de l'au moins un actionneur (38) en vue d'entraîner un braquage des roues orientables (15) lorsque le véhicule automobile (1) est en mouvement et/ou n'est pas freiné.

12. Procédé pour faire fonctionner un système d'assistance de guidage en stationnement semi-automatique (30) d'un véhicule automobile (1) destiné à assister une orientation du véhicule automobile (1) dans un emplacement de stationnement (2), comprenant
a) détection d'un signal d'activation ;
b) détermination d'une direction de modification dans laquelle une orientation du véhicule automobile (1) doit être modifiée ; et
c) commande d'au moins un actionneur (38) au moyen d'une unité de commande (40) dans un état actif du système d'assistance de guidage en stationnement (30) de telle sorte que des roues orientables (15) du véhicule automobile (1) soient braquées dans la direction de modification lorsque le sens du déplacement réglé est la marche avant, et que les roues orientables (15) soient braquées à l'opposé de la direction de modification lorsque le sens du déplacement réglé est la marche arrière.

13. Procédé selon la revendication 12, **caractérisé en ce que** la commande d'au moins un actionneur (38) au moyen d'une unité de commande (40) dans un état actif du système d'assistance de guidage en stationnement (30) est effectuée de telle sorte que les roues orientables (15) du véhicule automobile (1) soient braquées pour l'essentiel au maximum dans la direction de modification lorsque le sens du déplacement réglé est la marche avant, et que les roues orientables (15) soient braquées pour l'essentiel au maximum à l'opposé de la direction de modification lorsque le sens du déplacement réglé est la marche arrière.

14. Procédé selon la revendication 12 ou 13, **caractérisé en ce que** des informations d'écart qui incluent des informations sur un ou plusieurs écarts du véhicule automobile (1) par rapport à des objets qui délimitent l'emplacement de stationnement (2), sont déterminées au moyen d'une unité de détermination d'écart (56) et une recommandation de sens de déplacement est déterminée et délivrée par l'unité de commande (40) en se basant sur les informations d'écart.

15. Procédé selon la revendication 14, **caractérisé en ce que** l'écart ou les plusieurs écarts sont comparés avec une valeur de seuil d'écart au moyen d'un comparateur (66) de l'unité de commande (40) et un signal d'alerte est délivré lorsque l'écart ou l'un des plusieurs écarts devient inférieur à la valeur de seuil d'écart.

16. Procédé selon l'une des revendications 14 ou 15, **caractérisé en ce que** l'unité de commande (40) est connectée à un système de freinage du véhicule automobile (1) et l'unité de commande (40), en cas de franchissement vers le bas de la valeur de seuil d'écart, freine et/ou inhibe activement un mouvement du véhicule automobile (1) qui entraîne une réduction supplémentaire de l'écart ou de l'un des plusieurs écarts.

17. Procédé selon l'une des revendications 12 à 16, **caractérisé en ce que** l'unité de commande (40) reçoit des signaux d'un ou plusieurs capteurs qui détectent des états du véhicule automobile et/ou des événements, et l'unité de commande (40) interprète les signaux et influence des fonctions du système d'assistance de guidage en stationnement (30) en fonction de l'interprétation.

18. Procédé selon la revendication 17, **caractérisé en ce que** les signaux comprennent une information sur une vitesse du véhicule automobile (1) et l'unité de commande (40) influence les fonctions du système d'assistance de guidage en stationnement (30) **en ce que** le système d'assistance de guidage en stationnement (30) est désactivé en cas de dépassement d'une valeur de vitesse prédéfinie.

19. Procédé selon la revendication 17 ou 18, **caractérisé en ce que** les signaux comprennent une information sur une intervention sur la direction par un conducteur du véhicule automobile (1) et l'unité de commande (40) influence les fonctions du système d'assistance de guidage en stationnement (30) **en ce que** le système d'assistance de guidage en stationnement (30) est désactivé en cas de constatation de l'intervention sur la direction.

20. Procédé selon l'une des revendications 17 à 19, **caractérisé en ce que** les signaux comprennent une information sur un état de déplacement et/ou un état de freinage du véhicule automobile (1) et l'unité de commande influence les fonctions du système d'assistance de guidage en stationnement (30) **en ce que** la commande de l'au moins un actionneur (38) en vue d'entraîner un braquage des roues orientables (15) est inhibée lorsque le véhicule automobile (1) est en mouvement et/ou n'est pas freiné.

21. Procédé selon l'une des revendications précédentes, **caractérisé en ce que** l'unité de détermination d'écart (56) comprend des capteurs de mesure d'écart à une extrémité avant (25) et à une extrémité arrière (26) du véhicule automobile (1) et les informations d'écart comprennent un écart minimal du véhicule automobile (1) par rapport à une délimitation avant et un écart minimal par rapport à une délimitation arrière de l'emplacement de stationnement (2).

22. Procédé selon l'une des revendications précédentes, **caractérisé en ce que** l'unité de commande (40) comprend une unité de détermination de l'orientation (72) qui compare une orientation actuelle du véhicule automobile (1) avec une orientation de consigne et, en cas de concordance de l'orientation actuelle avec l'orientation de consigne, commande l'au moins un actionneur (38) de telle sorte que les roues orientables (15) soient déplacées dans une position centrale non braquée.
